# EUROPÄISCHE PATENTANMELDUNG

(11) **EP 3 306 158 A1**
(43) Veröffentlichungstag der Anmeldung: **11.04.2018**
(21) Anmeldenummer: 16192338.8
(22) Anmeldetag: 05.10.2016
(51) Int. Cl.: F16L 5/04

(54) **DURCHFÜHRUNG EINER LEITUNG DURCH EIN GEBÄUDEBAUTEIL**

(71) Anmelder: HILTI Aktiengesellschaft, 9494 Schaan (LI)
(72) Erfinder: Thiemann, Frank, 86899 Landsberg/Lech (DE); Simon, Sebastian, 86807 Buchloe Lindenberg (DE)
(74) Vertreter: Hilti Aktiengesellschaft Corporate Intellectual Property

(57) **Zusammenfassung**

Die Erfindung betrifft eine Leitungsdurchführung (1) zur Durchführung einer Leitung (4) durch ein Gebäudebauteil mit einer oder mehreren Dichtungsanordnungen (2) zum Durchführen der Leitung (4), wobei die eine oder die mehreren Dichtungsanordnungen (2) mindestens zwei einander gegenüberliegenden Dichtungsstrukturen (51) aufweisen, wobei mindestens eine erste der Dichtungsstrukturen (51) eine Anordnung aus zueinander benachbarten länglichen Lamellen (53) aufweist, deren abstehenden Enden an einer zweiten der Dichtungsstrukturen (51) anliegen und so den Durchlassbereich abdichten.

## Beschreibung

### Technisches Gebiet

Die Erfindung betrifft Vorrichtungen zum Durchführen von Leitungen durch Gebäudebauteile, wie z.B. Gebäudewände und dergleichen, und Maßnahmen, um einen Durchtritt von Brandgasen und Rauch durch eine solche Leitungsdurchführung zu verhindern.

### Technischer Hintergrund

Herkömmliche Leitungsdurchführungen durch Gebäudebauteile weisen in der Regel Maßnahmen auf, die das Durchdringen von Brandgasen und Rauch verhindern sollen. Diese Maßnahmen umfassen z.B. das Einbringen von Dichtungsmasse oder anderen Dichtungsmaterialien. Dadurch wird jedoch häufig keine ausreichende Dichtigkeit gegen das Durchdringen von Brandgasen und Rauch erreicht.

Aus der Druckschrift 8,869,475 B2 ist eine Leitungsdurchführung für ein Bauelement bekannt, das zum Bereitstellen einer Dichtigkeit gegenüber Brandgasen und Rauch einen Lamellenvorhang aus schlaufenförmigen Lamellen aufweist, die sich an eine durchgeführte Leitung anlegen. Jedoch kann insbesondere bei Leitungen mit runden Querschnitten ein Vorhang aus derartigen Lamellen keine vollständige Dichtigkeit gegenüber dem Durchtritt von Brandgasen und Rauch gewährleisten.

Aus der Druckschrift DE 20 2007 017 899 U1 ist eine Vorrichtung zum Durchführen einer Leitung durch eine Öffnung in einer Wand bekannt, in der verformbare Lamellen angeordnet sind, die sich in radialer Richtung in Richtung einer Mittenachse der Leitungsdurchführung erstrecken. Eine derartige Leitungsdurchführung hat jedoch den Nachteil, dass diese nur bei einer hindurchgeführten Leitung abgedichtet werden kann und bei einer Bewegung der Leitung quer zur Längsachse der Leitungsdurchführung eine Dichtigkeit nicht mehr gewährleistet ist.

Aus der Druckschrift WO 2015/023313 ist eine Leitungsdurchführung bekannt, bei der zwei geneigte Paneele an quer verlaufenden Stegen aus elastomerem Material anliegen, wobei eine hindurchgeführte Leitung zwischen den Paneelen und dem elastomeren Steg aufgenommen wird. Die Flexibilität der Stege dient zum Abdichten des Bereichs um die hindurchgeführte Leitung. Aufgrund der geradlinigen Anlagefläche der Paneele an dem elastomeren Steg kann jedoch eine vollständige Abdichtung bei einer hindurchgeführten Leitung nicht gewährleistet werden.

Es ist Aufgabe der vorliegenden Erfindung, eine verbesserte Leitungsdurchführung zur Durchführung einer Leitung durch ein Gebäudebauelement zur Verfügung zu stellen, bei dem eine Dichtigkeit gegenüber Brandgasen und Rauch auch bei einer Bewegung der Leitung innerhalb der Durchführung gewährleistet ist.

### Offenbarung der Erfindung

Diese Aufgabe wird durch die Leitungsdurchführung gemäß Anspruch 1 sowie durch die Anordnung gemäß dem nebengeordneten Anspruch gelöst.

Weitere Ausgestaltungen sind in den abhängigen Ansprüchen angegeben.

Gemäß einem ersten Aspekt ist eine Leitungsdurchführung zur Durchführung einer Leitung durch ein Gebäudebauteil mit einer oder mehreren Dichtungsanordnungen vorgesehen, wobei die eine oder die mehreren Dichtungsanordnungen mindestens zwei einander gegenüberliegenden Dichtungsstrukturen aufweisen, wobei mindestens eine erste der Dichtungsstrukturen eine Anordnung aus zueinander benachbarten länglichen Lamellen aufweist, deren abstehenden Enden an einer zweiten der Dichtungsstrukturen anliegen und so den Durchlassbereich abdichten.

Eine Idee der obigen Leitungsdurchführung besteht darin, die Abdichtung einer hindurchgeführten Leitung durch eine Dichtungsanordnung vorzusehen, die mindestens zwei einander gegenüberliegende elastisch verformbare Dichtungsstrukturen aufweist. Die Dichtungsstrukturen liegen an einem Durchlassbereich aneinander an, durch den die hindurchgeführte Leitung nach der Montage verläuft. Im Bereich der hindurchgeführten Leitung verformen sich die Dichtungsstrukturen beidseitig und liegen an einer Mantelfläche der hindurchgeführten Leitung an und dichten diese gegen einen Durchtritt von Brandgasen und Rauch in axiale Richtung ab.

Durch das Vorsehen von mindestens zwei einander gegenüberliegenden Dichtungsstrukturen kann eine hindurchgeführte Leitung unabhängig von ihrem Querschnitt vollständig abgedichtet werden.

Durch die elastische Ausbildung der Dichtungsstrukturen ist zudem auch eine Verschiebung der Leitung entlang des Durchlassbereiches möglich, ohne dass es zu einer Undichtigkeit kommt, da sich das flexible Material der Dichtungsstrukturen an eine veränderte Position der Leitung anpassen kann. Auch ermöglicht die obige Dichtungsanordnung das Hindurchführen von mehreren Leitungen, ohne dass es zu einer Beeinträchtigung der Dichtungswirkung kommt.

Weiterhin kann die erste und die zweite Dichtungsstruktur der Dichtungsanordnung jeweils eine Anordnung aus zueinander benachbarten länglichen Lamellen aufweisen, deren abstehenden Enden aneinander anliegen.

Insbesondere können die Längen der benachbarten Lamellen der ersten und der zweiten Dichtungsstruktur jeweils variieren, wobei insbesondere die Lamellen der ersten und der zweiten Dichtungsstruktur kammartig ineinandergreifen.

Alternativ kann vorgesehen sein, dass die zweite Dichtungsstruktur ein flexibles Dichtungselement aus einem elastischen Material, insbesondere einem Schaummaterial, mit einer Anlagefläche aufweist, an der die abstehenden Enden der Lamellen der ersten Dichtungsstruktur anliegen.

Insbesondere kann das elastisch verformbare Material des Dichtungselements und das elastischen Material der Lamellen und deren geometrische Dimensionierung so gewählt sein, dass bei Hindurchführen der Leitung diese etwa zur Hälfte ihres Querschnitts in das elastisch verformbare Material der des Dichtungselements hineingedrückt wird.

Weiterhin können die erste und/oder die zweite Dichtungsstruktur ein intumeszierendes Material enthalten.

Es kann vorgesehen sein, dass zumindest die erste Dichtungsstruktur flexible Borsten als Lamellen aufweist, wobei die Borsten in mehreren Reihen angeordnet sind, um eine Bürstenstruktur auszubilden, wobei insbesondere sich die Borsten von benachbarten Reihen einander berühren.

Gemäß einer Ausführungsform können die Lamellen zumindest der ersten Dichtungsstruktur in Erstreckungsrichtung hin zum abstehenden Enden eine abnehmende Steifheit aufweisen.

Gemäß einem weiteren Aspekt ist eine Leitungsanordnung mit der obigen Leitungsdurchführung und einer hindurchgeführten Leitung vorgesehen, wobei die Leitung in dem Durchlassbereich zwischen der ersten und zweiten Dichtungsstruktur aufgenommen ist, so dass sowohl die erste als auch die zweite Dichtungsstruktur verformt ist.

Weiterhin können zumindest die Lamellen der ersten Dichtungsstruktur eine Breite in Anordnungsrichtung aufweisen, die kleiner ist als die Breite der hindurchgeführten Leitung, wobei insbesondere die Breite der hindurchgeführten Leitung um das 5-fache, vorzugsweise um das 10-fache größer ist als die Breite der Lamellen.

### Kurzbeschreibung der Zeichnungen

Ausführungsformen werden nachfolgend anhand der beigefügten Zeichnungen näher erläutert. Es zeigen:
- Figur 1: eine perspektivische Darstellung einer Leitungsdurchführung für ein Gebäudebauelement;
- Figur 2: eine Draufsicht einer Dichtungsanordnung in der Leitungsdurchführung der Figur 1;
- Figur 3: eine Querschnittsdarstellung einer weiteren Dichtungsanordnung;
- Figur 4: eine Draufsicht einer Dichtungsanordnung in der Leitungsdurchführung gemäß einer weiteren Ausführungsform; und
- Figur 5: eine Draufsicht einer Dichtungsanordnung in der Leitungsdurchführung gemäß einer weiteren Ausführungsform.

### Beschreibung von Ausführungsformen

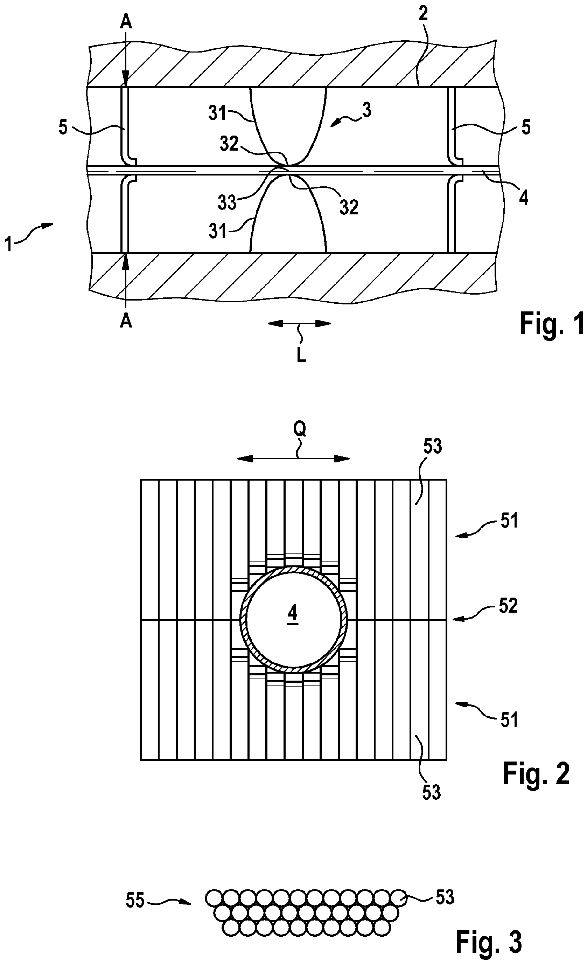

Figur 1 zeigt eine Querschnittsdarstellung durch eine Leitungsdurchführung 1. Die Leitungsdurchführung 1 dient zum Durchführen einer oder mehrerer Leitungen 4, wie beispielsweise Stromleitungen, Wasserleitungen, Gasleitungen und dergleichen, durch ein Gebäudebauteil, wie z.B. eine Gebäudewand, eine Decke und einen Boden.

Dazu weist die Leitungsdurchführung 1 ein Durchführungselement 2 auf, das im Wesentlichen eine hohlzylindrische Ausbildung hat und so eine Durchgangsöffnung zum Hindurchführen der Leitungen 4 entlang einer Längsrichtung L der Durchgangsöffnung ausbildet. Der Querschnitt des Durchführungselements 2 kann kreisförmig oder rechteckig sein.

In dem Durchführungselement 2 ist eine Halteeinrichtung 3 angeordnet, die insbesondere in einem Mittenbereich (bezüglich Längsrichtung L der Durchgangsöffnung) des Durchführungselements 2 angeordnet sein kann. Die Halteeinrichtung 3 dient zum Beaufschlagen der hindurchgeführten Leitung 4 mit einer Haltekraft, die quer zur Längsrichtung der hindurchgeführten Leitung 4 wirkt, so dass diese bezüglich einer axialen Verschiebung reibschlüssig gehalten wird. Die Halteeinrichtung 3 weist zwei einander zugewandte flexible Halteelemente 31 auf, die sich durch die Dicke einer durchgeführten Leitung 4 verformen und eine Kraft quer zur Längsrichtung L auf die hindurchgeführte Leitung 4 ausüben, die die Leitung 4 gegen ein Verrutschen halten. Die Halteelemente 31 weisen jeweils eine längliche Haltekante 32 auf und definieren so einen sich in Querrichtung Q quer zur Längsrichtung L erstreckenden Haltebereich 33.

Weiterhin sind Dichtungsanordnungen 5 in Längsrichtung L zur Halteeinrichtung 3 versetzt angeordnet, um ein Durchdringen von Brandgasen und Rauch durch das Durchführungselement 2 zu verhindern.

In Verbindung mit Figur 2, die eine Querschnittsdarstellung entlang der Schnittlinie A-A zeigt, wird ein möglicher Aufbau der Dichtungsanordnung 5 näher darstellt. Die Dichtungsanordnung 5 weist zwei einander gegenüberliegende Dichtungsstrukturen 51 auf. Die Dichtungsstrukturen 51 sind an zwei gegenüberliegenden Bereichen der Innenwand des Durchführungselements 2 in eine Querrichtung Q verlaufend angeordnet. In der gezeigten Ausführungsform weisen die Dichtungsstrukturen 51 einander unmittelbar benachbarte elastische Lamellen 53 auf, deren jeweils erstes Ende an der betreffenden Innenwand des Durchführungselements 2 befestigt ist, so dass sich die Lamellen 53 ins Innere der Durchführungselemente 2 erstrecken. Die jeweiligen zweiten Enden der Lamellen 53 befinden sich in einem Durchlassbereich 52.

Die Lamellen 53 weisen jeweils Längen auf, so dass diese mit oder im Bereich ihrer zweiten Enden jeweils aneinander anliegen und so einen Durchtritt von Brandgasen und Rauch durch den Durchlassbereich 52 verhindern.

In einem Abschnitt des Durchlassbereichs 52, in dem die Leitung 4 durch die Dichtungsanordnung 5 geführt wird, werden die Lamellen 53 im Bereich ihrer zweiten Enden in Längsrichtung L umgebogen und liegen so an der Mantelfläche der Leitung 4 an und dichten diese gegen Durchtritt von Brandgasen und Rauch ab. Um eine zuverlässige Abdichtung zu erreichen, sollte die Breite der Lamellen 53 in Querrichtung Q deutlich kleiner sein als der Durchmesser (oder die Abmessung in Querrichtung) der Leitung 4, insbesondere sollte die Breite der Lamellen 53 in Querrichtung um den Faktor 5, vorzugsweise um den Faktor 10, kleiner sein als der Durchmesser (oder die Abmessung in Querrichtung) der Leitung 4. Die Dicke der Lamellen 53 in Längsrichtung kann zwischen 0,5 mm und 5mm, vorzugsweise zwischen 1mm und 3 mmm betragen. Die Dichtungsstrukturen 51 können mehrere unmittelbar in Längsrichtung L hintereinander angeordnete Anordnungen von Lamellen 53 umfassen.

Die Lamellen 53 können einen rechteckigen Querschnitt aufweisen, so dass benachbarte Lamellen 53 mit ihren Seitenflächen aneinander anliegen, um eine Dichtigkeit auch bezüglich eines Durchtritts zwischen den Lamellen 53 zu erreichen.

Alternativ können die Lamellen 53 auch als Borsten mit runden Querschnitten ausgebildet sein und mehrere Lagen in Längsrichtung L aufweisen, um so eine Bürstenstruktur 55 auszubilden. Die Borsten der Bürstenstruktur 55 liegen dabei vorzugsweise aneinander an, um so eine ausreichende Dichtigkeit gegenüber dem Durchtritt von Brandgasen und Rauch zu gewährleisten. Insbesondere können die Borsten der Bürstenstruktur 55 mit einer möglichst hohen Packungsdichte aneinander anliegen, so dass eine Anordnung, wie sie beispielsweise in Figur 3 dargestellt ist, in einer Querschnittsansicht bezüglich der Erstreckungsrichtung der Borsten vorgesehen ist. Dabei sind mehrere parallele Reihen einander sich berührender Borsten jeweils um einen Radius der Borsten zueinander versetzt angeordnet, wobei die Borsten von benachbarten Reihen ebenfalls aneinander anliegen.

Die Lamellen 53 bzw. die Borsten sind vorzugsweise aus einem elastischen Kunststoffmaterial ausgebildet. Weiterhin können auch Gewebe, Gelege oder Papiermaterialien vorgesehen sein, die flexibel sind sich gut an der Mantelfläche der Leitung 4 anlegen können und möglichst eine elastische Kraft auf die Mantelfläche ausüben, um einen möglichst dichten Verschluss im Bereich um die Mantelfläche der Leitung zu gewährleisten. Die Lamellen 53 können weiterhin ein intumeszierendes Material aufweisen, wie z.B. mit einem intumeszierenden Material beschichtet sein oder ein intumeszierendes Material umschließen, und insbesondere aus einem mit intumeszierendem Material versehenes Papier umfassen.

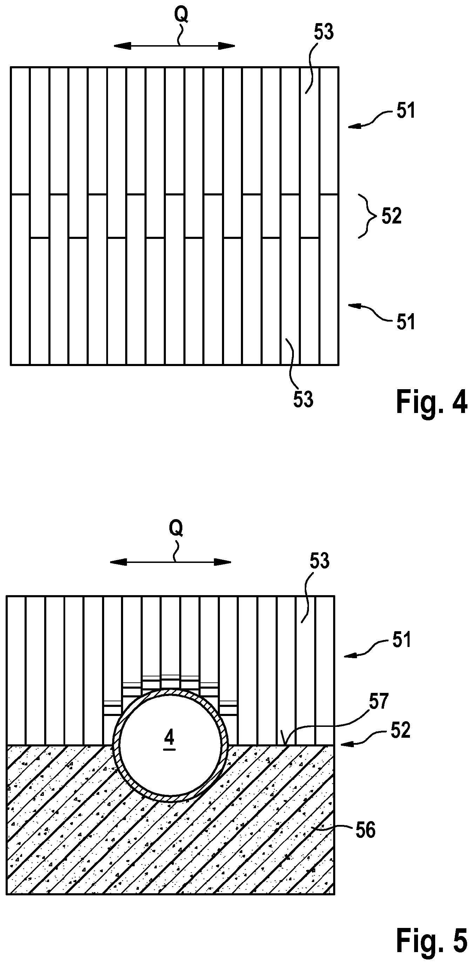

Wie in Figur 4 gezeigt, können die Lamellenanordnungen 51 auch Lamellen 53 unterschiedlicher Länge aufweisen, so dass zweite Enden von jeweils einander gegenüberliegende Lamellen 53 an Stellen aneinander anliegen, die entlang der der Querrichtung Q in einer Erstreckungsrichtung E der Lamellen 53 versetzt sind. Dadurch ergibt sich ein verbreiterter Durchlassbereich 52 Dies ermöglicht ein verbessertes Anliegen an der durchgeführten Leitung 4.

Figur 5 zeigt eine Querschnittsdarstellung durch eine Dichtungsanordnung 5 gemäß einer weiteren Ausführungsform, wobei verschiedene Dichtungsstrukturen vorgesehen sind. Eine erste Dichtungsstruktur 51 ist wie oben beschrieben aufgebaut und weist entsprechend eine Lamellenanordnung aus einander benachbarten Lamellen 53 auf, die sich in Querrichtung Q des Durchlassbereichs 52 erstrecken. Die zweiten Enden der Lamellen 53 liegen an einer zweiten Dichtungsstruktur 56 an, die ein durchgehendes flexibles Dichtungselement, mit einer sich in Querrichtung Q erstreckenden Anlagefläche 57 aufweist. Der Durchlassbereich 52 wird durch das Anliegen der zweiten Enden der Lamellen 53 an der Anlagefläche 57 des durchgehenden Dichtungselements der zweiten Dichtungsstruktur 56 gebildet.

Die zweite Dichtungsstruktur 56 ist aus einem elastisch verformbaren Material gebildet, wie beispielsweise ein Schaumstoff oder dergleichen, das insbesondere ein intumeszierendes Material aufweist. Das elastisch verformbare Material des durchgehenden Dichtungselements und das elastischen Material der Lamellen und deren geometrische Dimensionierung sind so gewählt, dass bei Hindurchführen der Leitung 4 diese etwa zur Hälfte ihres Querschnitts in das elastisch verformbare Material der zweiten Dichtungsstruktur 56 hineingedrückt wird und diese dadurch verformt.

Beim Hindurchführen einer Leitung 4 verformt ein Teil der Leitung 4 das elastisch verformbare durchgehende Dichtungselement 56, während der aus der zweiten Dichtungsstruktur 56 herausragende Teil des Leitungsquerschnitts von den Lamellen 53 so umgibt, dass diese mit ihren zweiten Enden an der Mantelfläche der Leitung 4 anliegen. So kann eine Abdichtung gegenüber Brandgasen und Rauch erreicht werden, da jeder Teil der Mantelfläche in Kontakt mit einer Dichtungsstruktur 51 ist.

Um eine verbesserte Abdichtung der mit Lamellen 53 ausgebildeten Dichtungsstrukturen 51 zu erreichen, können die Lamellen der ersten Dichtungsstruktur 51 mit sich ändernder Elastizität ausgebildet sein, so dass an deren Befestigung an dem Durchführungselement 2 das Material der Lamellen 53 eine geringere Elastizität aufweist als an deren zweiten Enden. Mit anderen Worten nimmt die Steifigkeit der Lamellen 53 in Richtung deren zweiten Enden ab. Somit verformt eine hindurchgeführte Leitung 4 die Lamellen 53 im Wesentlichen unmittelbar an deren Mantelfläche, wobei der umgebogene Abschnitt der Lamellen 53 sich dann an die Mantelfläche in Längsrichtung L anlegt. Dies ermöglicht eine besonders gute Abdichtung gegenüber Brandgasen und Rauch.

## Patentansprüche

1. Leitungsdurchführung (1) zur Durchführung einer Leitung (4) durch ein Gebäudebauteil mit einer oder mehreren Dichtungsanordnungen (2) zum Durchführen der Leitung (4), wobei die eine oder die mehreren Dichtungsanordnungen (2) mindestens zwei einander gegenüberliegenden Dichtungsstrukturen (51) aufweisen, wobei mindestens eine erste der Dichtungsstrukturen (51) eine Anordnung aus zueinander benachbarten länglichen Lamellen (53) aufweist, deren abstehenden Enden an einer zweiten der Dichtungsstrukturen (51) anliegen und so den Durchlassbereich abdichten.

2. Leitungsdurchführung (1) nach Anspruch 1, wobei die erste und die zweite Dichtungsstruktur (51) der Dichtungsanordnung (5) jeweils eine Anordnung aus zueinander benachbarten länglichen Lamellen (53) aufweisen, deren abstehenden Enden aneinander anliegen.

3. Leitungsdurchführung (1) nach Anspruch 2, wobei die Längen der benachbarten Lamellen (53) der ersten und der zweiten Dichtungsstruktur (51) jeweils variieren, wobei insbesondere die Lamellen (53) der ersten und der zweiten Dichtungsstruktur (51) kammartig ineinandergreifen.

4. Leitungsdurchführung (1) nach Anspruch 1, wobei die zweite Dichtungsstruktur (51) ein flexibles Dichtungselement (56) aus einem elastischen Material, insbesondere einem Schaummaterial, mit einer Anlagefläche aufweist, an der die abstehenden Enden der Lamellen der ersten Dichtungsstruktur (51) anliegen.

5. Leitungsdurchführung (1) nach Anspruch 4, wobei das elastisch verformbare Material des Dichtungselements (569 und das elastischen Material der Lamellen (53) und deren geometrische Dimensionierung so gewählt sind, dass bei Hindurchführen der Leitung (4) diese etwa zur Hälfte ihres Querschnitts in das elastisch verformbare Material der des Dichtungselements (56) hineingedrückt wird.

6. Leitungsdurchführung (1) nach einem der Ansprüche 1 bis 5, wobei die erste und/oder die zweite Dichtungsstruktur (51) ein intumeszierendes Material enthalten.

7. Leitungsdurchführung (1) nach einem der Ansprüche 1 bis 6, wobei zumindest die erste Dichtungsstruktur (51) flexible Borsten als Lamellen (53) aufweist, wobei die Borsten in mehreren Reihen angeordnet sind, um eine Bürstenstruktur (55) auszubilden, wobei insbesondere sich die Borsten von benachbarten Reihen einander berühren.

8. Leitungsdurchführung (1) nach einem der Ansprüche 1 bis 7, wobei die Lamellen zumindest der ersten Dichtungsstruktur (51) in Erstreckungsrichtung hin zum abstehenden Enden eine abnehmende Steifheit aufweisen.

9. Leitungsanordnung mit einer Leitungsdurchführung (1) nach einem der Ansprüche 1 bis 8 und einer hindurchgeführten Leitung (4), wobei die Leitung (4) in dem Durchlassbereich zwischen der ersten und zweiten Dichtungsstruktur (51) aufgenommen ist, so dass sowohl die erste als auch die zweite Dichtungsstruktur (51) verformt ist.

10. Leitungsanordnung nach Anspruch 9, wobei zumindest die Lamellen (53) der ersten Dichtungsstruktur (51) eine Breite in Anordnungsrichtung aufweisen, die kleiner ist als die Breite der hindurchgeführten Leitung (4), wobei insbesondere die Breite der hindurchgeführten Leitung um das 5-fache, vorzugsweise um das 10-fache größer ist als die Breite der Lamellen.

11. Verwendung der Leitungsdurchführung nach einem der Ansprüche 1 bis 8 zur Abdichtung gegenüber Brandgasen und Rauch in einem Gebäudebauteil.
